**Europäisches Patentamt**

**European Patent Office**

**Office européen des brevets**

⑩

(11) Publication number: **0 181 035**
**B1**

(12) **EUROPEAN PATENT SPECIFICATION**

(45) Date of publication of patent specification: **22.08.90**

(21) Application number: **85201771.4**

(22) Date of filing: **31.10.85**

(51) Int. Cl.⁵: **B 01 J 23/88, C 10 G 45/08**

(54) **Preparation of high activity silica-supported hydrotreating catalysts and catalysts thus prepared.**

(30) Priority: **05.11.84 US 668359**
**05.11.84 US 668358**
**05.11.84 US 668357**

(43) Date of publication of application:
**14.05.86 Bulletin 86/20**

(45) Publication of the grant of the patent:
**22.08.90 Bulletin 90/34**

(84) Designated Contracting States:
**BE DE FR GB IT NL**

(56) References cited:
**EP-A-0 164 162**
**GB-A-1 428 755**
**GB-A-1 511 900**
**GB-A-2 089 803**
**US-A-3 167 497**
**US-A-4 005 007**
**US-A-4 424 141**

(73) Proprietor: **SHELL INTERNATIONALE**
**RESEARCH MAATSCHAPPIJ B.V.**
**Carel van Bylandtlaan 30**
**NL-2596 HR Den Haag (NL)**

(72) Inventor: **Thompson, Mark Stewart**
**15830 Sierra Grande Drive**
**Houston Texas 77083 (US)**

(74) Representative: **Aalbers, Onno et al**
**P.O. Box 302**
**NL-2501 CH The Hague (NL)**

Courier Press, Leamington Spa, England.

# EP 0 181 035 B1

**Description**

The present invention relates to improvements in the preparation of silica supported hydrotreating catalyst via aqueous methods. Silica-supported hydrotreating catalysts, when prepared by conventional aqueous pore-filling impregnation with catalytically active metals, tend to have very poor activity compared to corresponding alumina-based catalysts. This is thought to be because the metal oxides ($MoO_3$, NiO, CoO) intereact very weakly with the support, and thus are very poorly dispersed on the support.

Potentially, silica-based hydrotreating catalysts should perform well in treating residual oil feedstocks. Silica-based catalysts should be less prone to coke formation than alumina-based catalysts because of the lower acidity of silica. Since coke deposition is a major catalyst deactivator in such applications, an active and stable silica-based catalyst could have an enormous impact on hydrotreating such feedstocks.

Processes for hydrotreating olefins and aromatics in the presence of catalysts comprising molybdenum and nickel in a particular atomic ratio supported on silica are known from U.S. patent specifications 3,167,496 and 3,167,497. These catalysts are prepared by conventional aqueous impregnation, preferably with the precursor of the molybdenum catalytic agent prior to impregnation with the precursor of the nickel catalytic agent. The molybdenum compound content ranges between 12 and 35%w (as $MoO_3$), based on total weight of the catalyst. The nickel compound is preferably present in an amount to provide an atomic ratio of molybdenum to nickel between about 2—3.

In U.S. patent specification 3,420,771 a process is disclosed for hydrorefining an asphaltenic hydrocarbonaceous charge stock containing either sulphurous or nitrogenous compounds in contact with a catalyst prepared by impregnating hydrated silica which has not been calcined (containing 5—15%w water) with from 4—30%w of aqueous molybdenum compounds prior to calcining. Preferably the catalyst also contains from about 1—6%w nickel. Nickel nitrate hexahydrate and phosphomolybdic acid are suggested as the source of catalytically active metals.

These prior art methods of preparing silica-supported catalysts all suffer from the disadvantage of poor catalytic metals distribution on the support. It has now been found that silica-based hydrotreating catalysts which overcome this disadvantage by having an improved dispersion of metals on the support, thereby greatly increasing catalyst activity, can be prepared via an aqueous method when use is made of certain large nitrogen-containing organic compounds.

The present invention thus relates to a process for preparing silica-supported catalysts containing 10—25%w molybdenum and from 1—5%w nickel and/or cobalt as hydrogenation metals, which comprises impregnating a dried silica support at elevated temperature with the aqueous solution of step (d), which has been obtained by:

(a) preparing a slurry of about equal quantities of $MoO_3$ an ethylenediamine tetraacetic acid (EDTA) in water to provide from 10 to 25%w of Mo on said support;

(b) adding from at least said equal quantity up to a double quantity of $(NH_4)_2CO_3$ to the slurry and mixing same;

(c) adding about half as much hydrazine to the mixture as the quantity of $(NH_4)_2CO_3$ added;

(d) heating the mixture from step (c) to a temperature sufficient to form $(NH_4)_2[Mo_2O_4(EDTA)]$ in a reasonable time;

followed by drying the Mo-impregnated silica at elevated temperature; whilst the dried silica support is impregnated with a desired quantity of aqueous nickel and/or cobalt salt solution either before or after the impregnation with the solution from step (d), and drying the Ni- and/or Co-impregnated silica at elevated temperature.

Further, the present invention relates to a process for preparing silica-supported catalysts containing 10—25%w molybdenum and from 1—5%w nickel and/or cobalt as hydrogenation metals which comprises impregnating a dried silica support at elevated temperature with the aqueous solution from step (b) which has been obtained by:

(a) preparing a slurry of an amount of $MoO_3$ and diethylene triamine (DT) in water to provide from 10 to 25% Mo on said support;

(b) heating and mixing the slurry in sufficient water to dissolve the $MoO_3$;

followed by drying the Mo-impregnated silica at elevated temperature; whilst the dried silica support is impregnated with a desired quantity of aqueous nickel and/or cobalt salt solution either before or after the impregnation with the solution from step (b) and drying the Ni-Mo or Co-Mo impregnated silica at elevated temperature.

Furthermore, the present invention relates to a process for preparing silica-supported catalysts containing 10—25%w molybdenum and from 1—5%w nickel and/or cobalt as hydrogenation metals which comprises impregnating a dried silica support at elevated temperature with the aqueous solution from step (d) which has been obtained by:

(a) dissolving an appropriate amount of nitrilotriacetic acid (NTA) in ammonium hydroxide;

(b) adding to the mixture from step (a) an amount of $MoO_x$ to provide from 10 to 25%w Mo on said support;

(c) heating the mixture in step (b) until the reaction is substantially complete;

(d) cooling the mixture from step (c) and adding an amount of nickel and/or cobalt salt to provide from

2

1—5%w Ni and/or Co on said support; and drying the Ni-Mo- and/or Co-Mo- impregnated silica at elevated temperature.

Without wishing to be bound to any particular theory, it would appear that the catalysts according to the present invention are prepared by methods which are believed to have in common that they shut off the formation of three-dimensional oxide lattices that sulphide to large crystallites. The approach presented herein involves the coordination of the large, nitrogen-cotaining organic ligands to an $MoO_x$ fragment, thereby preventing them from packing into the $MoO_3$ lattice. The nitrogen-containing organic ligands are ethlenediamine tetraacetic acid (EDTA), diethylene triamine (DT) and nitrilotriacetic acid (NTA).

Methods for preparing molybdenum compounds used to prepare improved catalyst with the help of EDTA according to the invention have been reported by R. C. Pecsock and D. T. Sawyer in *J. Am. Chem. Soc., 79,* 5496 (1956) and by D. T. Sawyer and J. M. McKinnie in *J. Am. Chem. Soc., 82* 4191 (1960). However, a much more tractable synthesis was devised for the method of the invention as follows:

$$2MoO_3 + EDTA \xrightarrow[\quad (NH_4)_2CO_3 \quad]{N_2H_4} (NH_4)_2[Mo_2O_4(EDTA)] + CO_2 + N_2$$

The compound was prepared in situ in >95% yield and impregnated directly on the carrier. In addition to $MoO_3$, suitable $MoO_x$ compounds include the molybdates, e.g., $MoO_4^=$, $Mo_2O_7^=$ and $Mo_7O_{24}^{-6}$.

An interesting feature of the preparative system described hereinabove is the observation of severe deactivation of the catalyst if heated above 200°C in either $N_2$ or $O_2$ before sulphiding. At 400°C more than half of the activity has disappeared. The deactivation observed may well correspond to thermal ($N_2$) or oxidative ($O_2$) ligand degradation followed by sintering of the resultant mertal oxide fragments. The X-ray diffraction patterns of the sulphided form of the active and deactivated catalyst were consistent with this explanation, with crystalline $MoS_2$ being present in the deactivated catalyst, but not in the active version.

A suitable method for preparing the molybdenum compound used when diethylene triamine is used in the process according to the invention has been reported by W. F. Marzluff, *Inorg. Chem., 3,* 395 (1964). The compound may be prepared in situ by the reaction shown below and impregnated directly on the carrier.

$$MoO_3 + DT \xrightarrow[\Delta]{H_2O} MoO_3 (DT)$$

In addition to $MoO_3$, suitable $MoO_x$ compounds include the molybdates, e.g., $MoO_4^=$, $Mo_2O_7^=$ and $Mo_7O_{24}^{-6}$. X-ray diffraction patterns and Raman spectra of a sulphided catalyst prepared in accordance with the invention were consistent with the dispersion/activity explanation presented hereinabove.

A suitable method for preparing the molybdenum compound when nitrilotriacetic acid is used in the process according to the invention is as follows:

$$MoO_3 + (NH_4)_3 NTA \rightarrow (NH_4)_3 NTAMoO_3$$

Dispersion control was achieved by a general method whereby a capping ligand was used on $MoO_3$ to control sterically the crystallinity of $MoO_3$. Further limitations on Mo particle size was attempted by chelation of nickel on the edges of some of the $NTA.MoO_3^{-3}$ units, thereby interrupting the $MoO_x$ lattice.

The above compound was prepared in situ and impregnated directly on the carrier. In addition to $MoO_3$, suitable $MoO_x$ compounds include the molybdates, e.g., $MoO_4^=$, $Mo_2O_7^=$ and $Mo_7O_{24}^{-6}$.

Suitable hydrotreating catalysts in accordance with the invention generally contain from 10—25%w molybdenum and from 1—5%w nickel and/or cobalt on a dried silica support. Preferably, the catalysts will contain from 10—20% molybdenum and from 2—4%w nickel and/or cobalt. Of the latter metals, nickel is the most preferred.

The Ni and/or Co compounds included in the catalysts according to the invention may be incorporated either before or after the Mo compound is impregnated therein when use is made of EDTA or DT as the organic nitrogen compound. Prior art methods for incorporating these metals are well known and are not critical to the performance of the catalysts of the invention. A suitable method for incorporating nickel is given in Example 1.

The activity testing of the catalysts according to the present invention was done in microreactor systems. These units are of conventional, fixed-bed, downflow design. Each unit consists of a 127 mm O.D. reactor with a preheat section, a phase separator and a large product tank. Unit pressure is controlled by a motor valve on the outlet gas line and inlet $H_2$ rate is maintained by pressure drop across a length of capillary tubing. LAPP pumps are used for charging liquid feed. Emergency circuitry automatically shuts down the unit in the event of fire, high reactor temperature, high or low unit pressure or loss of instrument air.

## EP 0 181 035 B1

A standard catalytically-cracked heavy gas oil was used as the microreactor test feed (feed properties: 88.99% C; 9.68% $H_2$; 1.28% S and 482 ppmwN). The test conditions used were as follows: 58.7 bar, 340—370°C, 1.0—2.0 LHSV, 2—4 $H_2$/oil mole ratio.

Catalysts were crushed, screened to 0.3—1 mm and dried at 482°C for testing. To facilitate control of the reactor temperature the catalysts were diluted 1—1 by volume with a high-density alumina or silicon carbide ground to 0.3—1 mm. Prior to processing hydrocarbon feed, the catalysts were presulphided at atmospheric pressure with 5% $H_2S$ in $H_2$. The temperature program for the presulphiding was 2 hours at 204°C, 1 hour at 315°C and 2 hours at 371°C. Depending upon the metals content, the catalysts will contain from 10—20%w sulphur.

In a typical Ni/Mo or Co/Mo hydrotreating catalyst preparation method catalytically active metals are deposited on a support by a dry (pore volume) impregnation technique. In this method, the support is impregnated with a quantity of metal-salt solution that is just sufficient to be absorbed in the pore volume of the support. The impregnating solution is generally prepared in two parts initially. One part contains the molybdenum salt and most of the water that can be used. After most of the molybdenum salt has dissolved (with heating and stirring), $H_2O_2$ (30%) is added (about 04 ml/g of Mo) to aid solubilization. The other part of the solution contains the Ni and/or Co salt(s) and sufficient phosphoric acid (85%) to aid the solubility and stability of the solution and to include about 3%w P in the catalyst. When both solutions are clear and cool, the Mo solution is added slowly (with vigorous stirring) to the Ni-P or Co-P solution. The combined solution is then diluted to the proper volume and added slowly, usually in one or more steps, to the support. The impregnated catalyst is dried at 121°C for about 2 hours and then calcined in air at 482°C for about 2 hours.

A substantial increase in the hydrodenitrification (HDN) activity, relative to existing commercial catalysts, is required to commercialize a new hydrotreating catalyst. In an effort to develop such an improved catalyst, a standard 72 hour HDN activity test was used to evaluate the various catalysts. In this test the hydrogenation ($H_2$), HDN and hydrodesulphurization (HDS) activities of a standard catalytically-cracked heavy gas oil were evaluated a 344°C and 57.8 bar $H_2$ partial pressure. Activities were compared based on observed rate constants for HDN and on plus flow kinetics for HDS.

Suitable conditions for the hydroconversion processes using improved catalysts according to the invention are as follows: a temperature of 350—420°C; a total pressure of 75—200 bar; a partial hydrogen pressure of 60—200 bar; a space velocity of 0.4—1.5 kg oil/1 catalyst/hour; and a hydrogen feed rate of 250—2500 Nl/kg oil feed.

The hydrodenitrification of heavy oil feeds according to the present process is preferably carried out under the following conditions: a temperature of 360—410°C; a total pressure of 100—150 bar; a partial hydrogen pressure of 80—150 bar; a space velocity of 0.4—1.0 kg oil/1 catalyst/hour; and a hydrogen feed rate of 500—1500 Nl/kg oil feed.

The hydrogen applied can be pure hydrogen or a hydrogen-containig gas, preferably one comprising more than 70% hydrogen. The hydrogen-containing gas may also contain up to about 10% of hydrogen sulphide.

The invention will now be illustrated by the following Examples:

### Example 1

Two catalysts, A (alumina-based) and B (silica-based) were prepared for comparison by a conventional aqueous impregnation method and were not prepared in accordance with the present invention.

Catayst A was a standard commercial hydrotreating catalyst (available from Shell Chemical Company) which was prepared by using a dry (pore volume) metals aqueous impregnation technique to imprt metals onto a gamma alumina support. This catalyst was prepared by the typical aqueous impregnation method described herein above. The composition of this alumina-based catalyst is given in Table 1. The various hydrotreating activities of this catalyst were taken as 1.0 for comparison.

Catalyst B was prepared by impregnating a dried Grade 57 silica (from Davison Chemical, a division of W. R. Grace Co.) with the same metals solution and dry (pore volume) technique used for Catalyst A. The composition of this silica-based catalyst is also given in Table 1.

A silica-bed catalyst, C, was prepared according to the present invention by slurrying 14.4 g $MoO_3$ and 14.6 g EDTA in 50 ml $H_2O$. 20 g $(NH_4)_2CO_3$ were then added slowly. Upon completion of this addition, 10 g $N_2H_4$ were added and the mixture was heated at reflux (ca. 90°C) for 2 hours. The solution volume was then reduced to 38 ml and the mixture was impregnated hot (ca. 90°C) on 38 g of Davison 57 silica (0.35—0.85 mm) which had been dried at 400°C for 2 hours. This material was then dried for 18 hours at 120°C, impregnated with 7.2 g $[Ni(H_2O)_6](NO_3)_2$ in 35 ml $H_2O$, and dried at 120°C for 12 hours. The composition of Catalyst C is also given in Table 1.

A silica-based catalyst, D, was prepared according to the present invention by slurrying 14.4 g $MoO_3$ in 25 ml $H_2$. To this was added 11 ml diethylene triamine (DT). The volume of this mixture was increased to 50 ml with water and the mixture was heated until all material had dissolved. The solution volume was adjusted to 56 ml with water and the hot solution was used to impregnate 40 g of 2 mm dia. silica spheres (available comercially from Shell International Chemical Company, Ghent, Belgium) which had been dried at 400°C for 2 hours. This material was then dried at 120°C for 12 hours. 8.5 g of $Ni(H_2O)_4(OAc)_2$ (OAc = acetate) was then dissolved in concentrated $NH_4OH$ and diluted to 30 ml with same.

The dried catalyst precursor was then impregnated with this solution and dried at 120°C for 12 hours. The composition of Catalyst D is also given in Table 1.

A silica-base catalyst, E, was prepared, according to the present invention, by dissolving 19.1 g nitrilotriacetic acid (NTA) in 30 ml 24% ammonium hydroxide. To this was added 14.4 g $MoO_3$ and the mixture was brought to boiling. After cooling to 50°—70°C, 8.7 g nickel nitrate was added and the mixture was diluted to 50 ml with water. 35 mg of 200°C dried silica spheres were then impregnated with this mixture and dried overnight at 120°C. The composition of Catalyst E is also given in Table 1.

TABLE 1

| Catalyst/ (Support) | Composition (% w) | | Surface Area m²/g |
|---|---|---|---|
| | Mo | Ni | |
| A ($Al_2O_3$) | 13.2 | 2.7 | 160 |
| B ($SiO_2$) | 15.4 | 4.6 | 140 |
| C ($SiO_2$) | 10.6 | 5.0 | 136 |
| D ($SiO_2$) | 13.8 | 2.6 | — |
| E ($SiO_2$) | 15 | 3 | — |

Example 2

The catalysts A—E were heated to about 200°C, presulphided and compared to determine their relative hydrotreating activities ($H_2$ = hydrogenation; HDN = hydrodenitrification and HDS = hydrodesulphurization) over the standard catalytically-cracked heavy gas oil having the feed properties described hereinabove. For the tests 10.4 ml of 0.3—1 mm catalyst particles were placed in a microreactor and used to contact the feed at 344°C, 58.7 bar, $H_2$/oil ratio = 4/1 and LHSV = 2.0. Results of the tests are shown in Table 2.

TABLE 2

| Catalyst/ (Support) | Relative activity | | |
|---|---|---|---|
| | $H_2$ | HDN | HDS |
| A | 1.00 ± .03 | 1.00 ± .10 | 1.00 ± .10 |
| B | 0.48 | 0.20 | 0.27 |
| C | 0.92 | 0.93 | 0.78 |
| D | 0.75 | 0.77 | 0.46 |
| E | 0.95 | 1.12 | 0.88 |

The relative activity of the commercial alumina-based catalyst A, was taken as 1.00 by definition. As can be seen from Table 2, the activity of the silica-based catalyst B, prepared in the same manner as that normally used for a commercial alumina-based hydrotreating catalyst gave very poor results for all three ($H_2$, HDN, HDS) hydrotreating activities. However, the HDN activity of the silica-based catalyst C, prepared according to the invention is within experimental error of the activity of a top quality commercial alumina-based hydrotreating catalyst, A, and nearly five times as active as a conventionally prepared silica-based catalyst. Also catalyst D is nearly four times as active as a conventionally prepared silica-based catalyst.

Catalyst E demonstrated an HDN activity even exceeding that of a top quality commercial alumina-based hydrotreating catalyst A and was nearly six times as active as a conventionally prepared silica-based catalyst. This catalyst E was also within experimental error of the $H_2$ activity and was only slightly below the HDS activity of the alumina-based catalyst A.

**Claims**

1. Process for preparing silica-supported catalysts containing 10—25%w molybdenum and from 1—5%w nickel and/or cobalt as hydrogenation metals which comprises impregnating a dried silica support at elevated temperature with the aqueous solution of step (d) which has been obtained by:

(a) preparing a slurry of about equal quantities of $MoO_3$ and EDTA) in water to provide from 10 to 25%w of Mo on said support;

(b) adding from at least said equal quantity up to a double quantity of $(NH_4)_2CO_3$ to the slurry and mixing same;

(c) adding about half as much hydrazine to the mixture as the quantity of $(NH_4)_2CO_3$ added;

(d) heating the mixture from step (c) to a temperature sufficient to form $(NH_4)_2[Mo_2O_4(EDTA)]$ in a reasonable time;

followed by drying the Mo-impregnated silica at elevated temperature; whilst the dried silica support is impregnated with a desired quantity of aqueous nickel and/or cobalt salt solution either before or after the impregnation with the solution from step (d), and drying the Ni- and/or Co-impregnated silica at elevated temperature.

2. Process for preparing silica-supported catalysts containing 10—25%w molybdenum and from 1—5%w nickel and/or cobalt as hydrogenation metals which comprises impregnating a dried silica support at elevated temperature with the aqueous solution from step (b) which has been obtained by:

(a) preparing a slurry of an amount of $MoO_3$ and diethylene triamine (DT) in water to provide from 10 to 25% Mo on said support;

(b) heating and mixing the slurry in sufficient water to dissolve the $MoO_3$;

followed by drying the Mo-impregnated silicate at elevated temperature; whilst the dried silica support is impregnated with a desired quantity of aqueous nickel and/or cobalt salt solution either before or after the impregnation with the solution from step (b) and drying the Ni-Mo or Co-Mo impregnated silica at elevated temperature.

3. Process for preparing silica-supported catalysts containing 10—25%w molybdenum and from 1—5%w nickel and/or cobalt as hydrogenation metals which comprises impregnating a dried silica support at elevated temperature with the aqueous solution from step (d) which has been obtained by:

(a) dissolving an appropriate amount of nitrilotriacetic acid (NTA) in ammonium hydroxide;

(b) adding to the mixture from step (a) an amount of $MoO_x$ to provide from 10 to 25%w Mo on said support;

(c) heating the mixture in step (b) until the reaction is substantially complete;

(d) cooling the mixture from step (c) and adding an amount of nickel and/or cobalt salt to provide from 1—5%w Ni and/or Co on said support; and drying the Ni-Mo- and/or Co-Mo- impregnated silica at elevated temperature.

4. Process according to one or more of the preceding claims, wherein the catalyst is heated to 200°C and sulphided before being used in a hydrotreating process.

5. Process according to one or more of the preceding claims, wherein the impregnation mixtures contain sufficient catalytically active metals to provide from 10—20%w molybdenum and 2—4% nickel on said support.

6. Process according to claim 2, wherein the molybdenum impregnation mixture is heated at reflux temperature of said mixture.

7. Process according to one or more of the preceding claims, wherein the $MoO_x$ is $MoO_3$, and the volume of the solution/mixture obtained is adjusted to the pore volume of the silica support before impregnating same.

8. Process according to claim 4, wherein the impregnated silica is dried at 200°C and sulphided before being used in a hydrotreating process.

9. Process according to any one of the preceding claims, wherein use is made of silica spheres as support.

10. A hydrotreating catalyst comprising from 10—25%w molybdenum and from 1—5%w nickel and/or cobalt as hydrogenation metals supported on silica whenever prepared according to a process as claimed in one or more of the preceding claims.

11. A hydrotreating catalyst comprising from 10—20%w molybdenum and from 2—4%w nickel as hydrogenation metals supported on silica which catalyst has been prepared by the process according to claim 7.

12. A sulphided hydrotreating catalyst comprising from 10—20%w molybdenum and from 2—45%w nickel as hydrogenation metals and from 10—20% sulphur, which catayst has been prepared by the process according to claim 4.

**Patentansprüche**

1. Verfahren zur Herstellung von Katalysatoren auf einem Siliciumdioxidträger, enthaltend 10 bis 25 Gewichtsprozent Molybdän und 1 bis 5 Gewichtsprozent Nickel und/oder Kobalt als Hydriermetalle, welches das Imprägnieren eines getrockneten Siliciumdioxidträgers bei erhöhter Temperatur mit der wäßrigen Lösung von Stufe (d), welche erhalten wurde durch

(a) Herstellen einer Aufschlämmung aus ungefähr gleichen Mengen MoO₃ und EDTA in Wasser, zwecks Erhalt von 10 bis 25 Gewichtsprozent Mo auf dem genannten Träger;

b) Zugeben von mindestens der gleichen Menge bis zur doppelten Menge an $(NH_4)_2CO_3$ zu der Aufgschlämmung und Mischen derselben;

c) Zugeben von Hydrazin zu der mischung in einer Menge, die ungefähr der Hälfte der Menge an zugegebenem $(NH_4)_2CO_3$ entspricht;

d) Erhitzen der Mischung aus Stufe (c) auf eine für die Bildung von $(NH_4)_2[Mo_2O_4(EDTA)]$ in einer akzeptablen Zeit ausreichende Temperatur;

gefolgt von Trocknen des mit Molybdän imprägnierten Siliciumdioxids bei erhöhter Temperatur, wobei der getrocknete Siliciumdioxidträger entweder vor oder nach dem Imprägnieren mit der Lösung aus Stufe (d) mit einer gewünschten Menge an wäßriger Nickel- und/oder Kobaltsalzlösung imprägniert wird, und Trocknen des mit Nickel und/oder Kobalt imprägnierten Siliciumdioxidträgers bei erhöhter Temperatur, umfaßt.

2. Verfahren zur Herstellung von Katalysatoren auf einem Siliciumdioxidträger, enthaltend 10 bis 25 Gewichtsprozent Molybdän und 1 bis 5 Gewichtsprozent Nickel und/oder Kobalt als Hydriermetalle, welches das Imprägnieren eines getrockneten Siliciumdioxidträgers bei erhöhter Temperatur mit der wäßrigen Lösung aus Stufe(b), welche erhalten wurde durch:

a) Herstellen einer Aufschlämmung aus einer Menge MoO₃ und Diäthylkentriamin in Wasser, zwecks Erhalt von 10 bis 25 Gewichtsprozent Mo auf dem genannten Träger;

b) Erhitzen und Mischen der Aufschlämmung in einer für die Auflösung von MoO₃ ausreichenden Menge Wasser;

gefolgt von Trocknen des mit Molybdfän imprägnierten Siliciumdioxidträgers bei erhöhter Temperatur, wobei der getrocknete Siliciumdioxidträger entweder vor oder nach dem Imprägnieren mit der Lösung aus Stufe (b) mit einer gewünschten Menge an wäßriger Nickel- und/oder Kobaltsalzlösung imprägniert wird, und Trocknen des Ni-Mo- oder Co-Mo-imprägnierten Siliciumdioxids bei erhöhter Temperatur, umfaßt.

3. Verfahren zur Herstellung von Katalysatoren auf einem Siliciumdioxidträger, enthaltend 10 bis 25 Gewichtsprozent Molybdän und 1 bis 5 Gewichtsprozent Nickel und/oder Kobalt als Hydriermetalle, welches das Imprägnieren eie getrockneten Siliciumdioxidträgers bei erhöhter Temperatur mit der wäßrigen Lösung aus Stufe (d), welche erhalten wurde durch:

a) Auflösen einer geeignete Menge an Nitrilotriessigsäure in Ammoniumhydroxid;

b) Zugeben einer Menge an $MoO_x$ zur Mischung aus Stufe(a) zwecks Erhalt von 10 bis 25 Gewichtsprozent Molybdän auf dem genannten Träger;

c) Erhitzen der Mischung in Stufe(b), bis die Reaktion im wesentlichen vollständig ist;

d) Abkühlen der Mischugn aus Stufe(c) und Zugeben einer Menge an Nickel- und/oder Kobaltsalz zwecks Erhalt von 1 bis 5 Gewichtsprozent Ni und/oder Co auf dem genannten Träger; und Trocknen des Ni-Mo- und/oder Co-Mo-imprägnierten Siliciumdioxidträgers bei erhöhter Temperatur, umfaßt.

4. Verfahren nach einem oder mehreren der vorstehenden Ansprüche, in welchem der Katalysator auf 200°C erhitzt und vor seiner Verwendung in einem Hydrierbehandlungsvrefahren sulfidiert wird.

5. Verfahren nach einem oder mehreren der vorstehenden Ansprüche, in welchem die Imprägniermischungen ausreichend katalytisch aktive Metalle enthalten, um 10 bis 20 Gewichtsprozent Molybdän und 2 bis 4 Gewichtsprozent Nickel auf dem genannten Träger zu erhalten.

6. Verfahren nach Anspruch 2, in welchem die Molybdän-Imprägniermischung bei Rückflußtemperatur der genannten Mischung erhitzt wird.

7. Verfahren nach einem oder mehreren der vorstehenden Ansprüche, in welchem das $MoO_x$ MoO₃ ist, und das Volumen der erhaltenen Lösung/Mischung an das Porenvolumen des Siliciumdioxidträgers vor dessen Imprägnierung angpaßt wird.

8. Verfahren nach Anspruch 4, in welchem das imprägnierte Siliciumdioxid bei 200°C getrocknet wird und vor seiner Verwendung in einem Hydrierbehandlungsverfahren sulfidiert wird.

9. Verfahren nach einem der vorstehenden Ansprüche, in welchem Siliciumdioxidkugeln als Träger eingesetzt werden.

10. Ein für die Hydrierbehandlung geeigneter Katalysator, umfassend 10 bis 25 Gewichtsprozent Molybdän und 1 bis 5 Gewichtsprozent Nickel und/oder Kobalt als Hydriermetalle auf einem Siliciumdioxidträger, wenn er durch ein Verfahren wie in einem oder mehreren der vorstehenden Ansprüche beansprucht, hergestellt wurde.

11. Ein für die Hydrierbehandlung geeigneter Katalysator, umfassend 10 bis 20 Gewichtsprozent Molybdän und 2 bis 4 Gewichtsprozent Nickel als Hydriermetalle auf einem Siliciumdioxidträger, welcher Katalysator durch das Verfahren nach Anspruch 7 hergestellt wurde.

12. Ein sulfidierter für die Hydrierbehandlung geeigneter Katalysator, umfassend 10 bis 20 Gewichtsprozent Molybdän und 2 bis 4 Gewichtsprozent Nickel als Hydriermetalle und 10 bis 20 Gewichtsprozent Schwefel, welcher Katalysator durch das Verfahren nach Anspruch 4 hergestellt wurde.

## Revendications

1. Procédé pour la préparation de catalyseurs sur support de silice contenant 10—25% en poids de molybdène et 1—5% en poids de nickel et/ou de cobalt come métaux d'hydrogénation, qui comprend l'imprégnation d'un support de silice séché à, température élevée avec la solution aqueuse de 'étape (d) qui a été obtenue;

(a) en préparant une bouillie de quantités à peu près égales de MoO₃ et de EDTA dans l'eau de manière à donner de 10 à 25% en poids de Mo sur le support;

(b) en ajoutant à la bouillie une quantité au moins égale et au maximum double de (NH₄)₂CO₃ et en mélangeant l'ensemble;

(c) en ajoutant au mélange une quantité d'hydrazine à peu près égale à la moitié de la quantité de (NH₄)₂CO₃ ajoutée;

(d) en chauffant le mélange de l'étape (c) à une température suffisante pour former (NH₄)₂(Mo₂O₄(EDTA)) en un temps raisonnable;

cela étant suivi d'un séchage à température élevée de la silice imprégnée de Mo; tandis que le support de silice séché est mprégnée d'une quantité désirée de solution aqueuse de sel de nickel et/ou de cobalt avant ou après l'imprégnation avec la solution de l'étape (d), et en séchant à température élevée la silice imprégnée de Ni et/ou de Co.

2. Procédé pour la préparation de catalyseurs sur support de silice contenant 10—25% en poids de molybdène et 1—5% en poids de nickel et/ou de cobalt come métaux d'hydrogénation, qui comprend l'imprégnation d'un support de silice séché à température élevée avec la solution aqueuse de l'étape (d) qui a été obtenue:

(a) en préparant une bouillie d'une quantité de MoO₃ et de diéthylène triamine dans l'eau de manière à doner de 10 à 25% de Mo sur le support;

(b) en chauffant et en mélangeant la bouillie dans assez d'eau pour dissoudre le MoO₃;

cela étant suivi d'un séchage à température élevée de la silice imprégnée de Mo; tandis que le support de silice séché est imprégné d'une quantité désirée de solution aqueuse de sel de nickel et/ou de cobalt avant ou après l'imprégnation avec la solution résultant de l'étape (b), et en séchant à température élevée la silice imprégnée de Ni-Mo et/ou de Co-Mo.

3. Procédé pour la préparation de catalyseurs sur support de silice contenant 10—25% en poids de molybdène et 1—5% en pods de nickel et/ou de cobalt comme métaux d'hydrogénation, qui comprend l'imprégnation d'un support de silice séché à température élevée avec la solution aqueuse provenant de l'étape (d) qui a été obtenu:

(a) en dissolvant une quantité appropriée d'acide nitrilotriacétique dans de l'hydroxyde d'ammonium;

(b) en ajoutant au mélange provenant de 'étape (a) une quantité de MoOₓ convenable pour donner de 10 à 25% en poids de Mo sur le support;

(c) en chanffant le mélange dans l'étape (b) jusqu'à ce que la réaction soit substantiellement complète;

(d) en refroidissant le mélange résultant de létape (c) et en ajoutant une quantité de sel de nickel et/ou de cobalt convenable pour donner 1—5% enn poids de Ni et/ou de Co sur le support; et en séchant la silice imprégnée de Ni-Mo et/ou de Co-Mo à température élevée.

4. Procédé selon une ou plusieurs des revendications précédentes, dans lequel le catalyseur est chauffé à 200°C et sulfuré avant d'être utilisé dans un procédé d'hydrotraitement.

5. Procédé selon une ou plusieurs des revendications précédentes, dans lequel les mélanges d'imprégnation contiennent assez de métaux catalytiquement actifs pour donner 10—20% en poids de molybdène et 2—4% en poids de nickel sur le support.

6. Procédé selon la revendication 2, dans lequel le mélange d'imprégnation en molybdène est chauffé à la température de reflux de ce mélange.

7. Procédé selon une ou plusieurs des revendications précédentes, dans lequel le MoOₓ est MoO₃ et le volume de la solution ou du mélange obtenu est ajusté au volume des pores du support de silice avant imprégnation de ce dernier.

8. Procédé selon la revendication 4, dans lequel la silice imprégnée est séchée à 200°C et sulfurée avant d'être utilisée dans un procédé d'hydrotraitement.

9. Procédé selon l'une quelconque des revendications précédentes, dans lequel on utilise des sphères de silice comme support.

10. Un catalyseur d'hydrotraitement comprenant 10—25% en poids de molybdène et 1—5% en poids de nickel et/ou de cobalt comme métaux d'hydrogénation déposés sur de la silice, chaque fois qu'il a été préparé par un procédé selon une ou plusieurs des revendications précédentes.

11. Un catalyseur d'hydrotraitement comprenant 10—20% en poids de molybdène et 2—4% en poids de nickel comme métaux d'hydrogénation déposés sur de la silice, ce catalyseur ayant été préparé par le procédé selon la revendication 7.

12. Un catalyseur d'hydrotraitement sulfuré comprenant 10—20% en poids de molybdène et 2—4% en poids de nickel comme métaux d'hydrogénation et 10—20% en poids de soufre, ce catalyseur ayant été préparé par le procédé selon la revendication 4.